# FASCICULE DE BREVET EUROPEEN

(11) **EP 2 900 546 B1**
(45) Date de publication et mention de la délivrance du brevet: **08.11.2017**
(21) Numéro de dépôt: 13759730.8
(22) Date de dépôt: 06.09.2013
(51) Int. Cl.: B62K 5/02, B62K 5/01, B62K 5/10, B62K 5/027, B62K 25/04, B60G 7/04, B60G 17/005

(54) **VEHICULE INCLINABLE**
KIPPBARES FAHRZEUG
TILTABLE VEHICLE

(30) Priorité: 27.09.2012 FR 1202586
(43) Date de publication de la demande: 05.08.2015
(73) Titulaire: Venturi Automobiles, 98000 Monaco (MC)
(72) Inventeur: MAUDUIT, Nicolas, 06500 Menton (FR); MARREC, Yann, 06300 Nice (FR)
(74) Mandataire: Audic, Hervé
(86) Numéro de dépôt international: PCT/EP2013/068486
(87) Numéro de publication internationale: WO 2014/048698

(56) Documents cités:
- WO-A1-2011/161334
- WO-A2-02/44008
- FR-A1- 2 550 507
- FR-A1- 2 834 961

## Description

La présente invention concerne un véhicule inclinable.

La demande de brevet français publiée sous le numéro FR 2 550 507 décrit un véhicule inclinable comportant : un châssis ; un bras oscillant droit et un bras oscillant gauche montés sur le châssis de manière pivotante autour d'un axe pivot transversal ; un point d'appui au sol droit et un point d'appui au sol gauche montés sur respectivement les bras oscillants droit et gauche ; et un système de blocage destiné à sélectivement solidariser et désolidariser les bras oscillants droit et gauche l'un de l'autre.

Ce document décrit en outre un vérin hydraulique reliant le balancier à un berceau (lui-même relié au châssis par une unique suspension), et pouvant bloquer le balancier dans n'importe quelle position, le blocage du balancier entraînant le blocage de l'inclinaison du véhicule.

Par ailleurs, la demande internationale PCT publiée sous le numéro WO 02/44008 A2 décrit un véhicule inclinable comportant des freins de blocage de suspension permettent aux bras de suspension d'être verrouillés l'un à l'autre et/ou au châssis.

Il peut être souhaité de trouver une manière alternative de bloquer l'inclinaison du véhicule, plus fiable que l'utilisation d'un vérin hydraulique pouvant connaitre des fuites.

A cet effet, il est proposé un véhicule inclinable selon la revendication 1.

D'autres caractéristique du véhicule inclinable selon la revendication 1 sont énoncées dans les revendications dépendantes 2 à 7.

Un exemple de mise en oeuvre de l'invention va à présent être décrit en référence aux figures suivantes :
- la figure 1 est une vue en trois dimensions de l'arrière d'un véhicule inclinable mettant en oeuvre l'invention,
- la figure 2 est une vue similaire à celle de la figure 1, mais agrandie et dans laquelle une roue arrière du véhicule inclinable est enlevée, et
- la figure 3 est une vue en trois dimensions d'un système de blocage d'inclinaison du véhicule inclinable des figures 1 et 2.

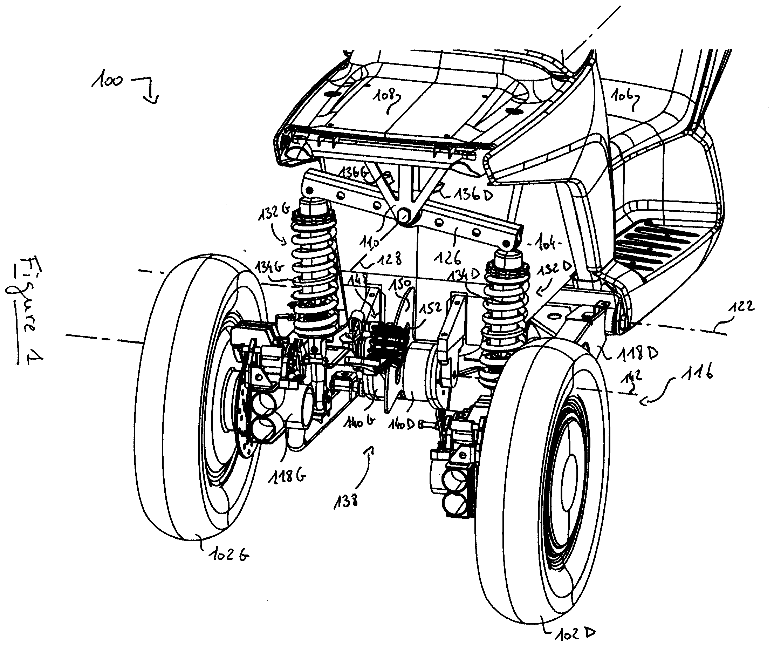

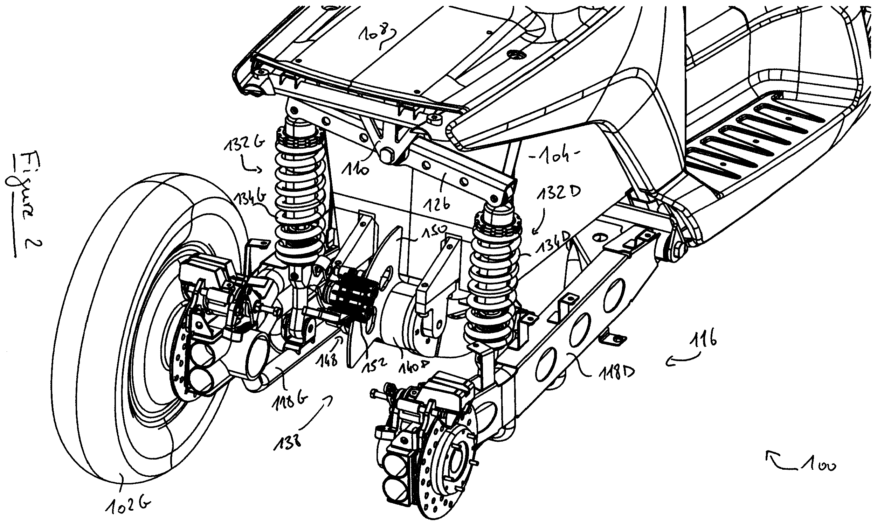

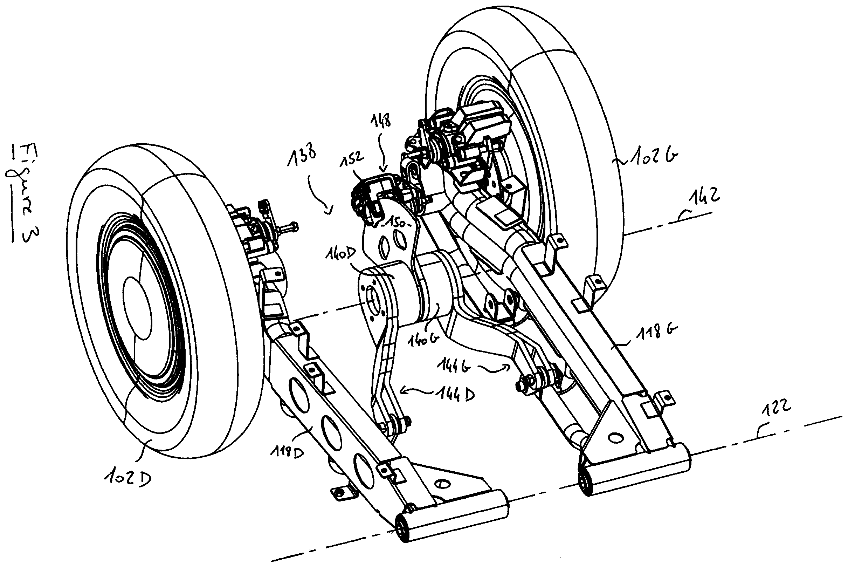

En référence aux figures 1 à 3, un exemple de véhicule inclinable 100 mettant en oeuvre l'invention va à présent être écrit.

Le véhicule inclinable 100 est un véhicule à trois ou quatre roues. Il comporte ainsi une roue arrière droite 102D, une roue arrière gauche 102G et un essieu avant (non représenté) comprenant une ou deux roues avant. Dans l'exemple décrit, l'essieu avant est directeur. À cet effet, le véhicule inclinable 100 comporte en outre une direction (non représentée) destinée à orienter la ou les roues avant.

Dans l'exemple décrit, les roues arrière 102D, 102G sont motrices, et intègrent à cet effet chacune un moteur électrique respectif (non représenté). En variante, un moteur électrique commun pourrait entraîner les deux roues arrière 102D, 102G.

Le véhicule inclinable 100 comporte en outre un châssis 104 supportant un siège 106 ayant la forme d'une selle et un porte-bagage 108 situé à l'arrière du siège 106. Le châssis 104 comporte en particulier une partie triangulaire transversale 110 présentant une pointe vers le bas, dont la fonction sera expliquée par la suite. Cette partie triangulaire 110 est située sous le porte-bagage 108 et présente un côté droit et un côté gauche se rejoignant à la pointe.

Le véhicule inclinable 100 comporte en outre un système de suspension 116 des roues arrière 102D, 102G qui va à présent être décrit.

Le système de suspension 116 comporte tout d'abord un bras oscillant droit 118D et un bras oscillant gauche 118G, s'étendant de manière globalement longitudinale. Chaque bras oscillant 118D, 118G présente, d'une part, une extrémité avant par laquelle il est monté sur le châssis 104 de manière pivotante autour d'un même axe pivot transversal 122, et, d'autre part, une extrémité arrière à laquelle l'une respective des roues 102D, 102G est attachée.

Le système de suspension 116 comporte en outre un balancier 126 monté sur la pointe de la partie triangulaire 110 du châssis 104 de manière pivotante autour d'un axe longitudinal 128. Le balancier 126 présente une partie droite située à droite de l'axe longitudinal 128 et une partie gauche située à gauche de l'axe longitudinal 128.

Le système de suspension 116 comporte en outre un montant droit 132D et un montant gauche 132G reliant respectivement les bras oscillants droit et gauche 118D, 118G aux parties droite et gauche du balancier 126 de telle sorte que lorsqu'un des bras oscillants 118D, 118G pivote dans un sens, l'autre soit entraîné dans l'autre sens par les montants 132D, 132G et le balancier 126, permettant ainsi l'inclinaison du véhicule 100. Il sera apprécié que les bras oscillants 118D, 118G sont destinés à prendre une suite continue de positions relatives. Les montants droit et gauche 132D, 132G comportent respectivement une suspension droite 134D et une suspension gauche 134G, toutes les deux passives. Plus précisément, les suspensions 134D, 134G comportent chacune un amortisseur linéaire et un ressort hélicoïdal.

Le balancier 126 fait avec le châssis 104 un angle défini comme nul lorsque les roues arrière 102D, 102G sont au même niveau vertical (pas d'inclinaison du véhicule).

Le système de suspension 116 comporte en outre des butées montées sur le châssis 104 et destinées à arrêter le balancier 126 de manière à limiter son débattement angulaire. Le débattement angulaire maximal du balancier 126 est choisi de sorte que l'angle d'inclinaison maximal (à gauche et à droite) du véhicule soit compris entre 25° et 50° par rapport à la verticale, et de préférence entre 30° et 35°. Dans l'exemple décrit, les butées comportent une butée droite 136D et une butée gauche 136G montées respectivement sur les côtés droit et gauche de la partie triangulaire 110 du châssis 104. De préférence, les butées sont déplaçables par rapport au châssis 104 de manière à régler le débattement maximal du balancier 126 et ainsi la valeur maximale de l'angle d'inclinaison. Le fait que les butées 136D, 136G servent à stopper le balancier 126 plutôt que les bras oscillants 118D, 118G permet de laisser les suspensions 134D, 134G opérationnelles même lorsque l'inclinaison maximale a été atteinte et que le balancier 126 est en butée.

Le système de suspension 116 comporte en outre un système de blocage 138 destiné à bloquer le mouvement relatif des bras oscillants droit et gauche 118D, 118G l'un par rapport à l'autre.

À cet effet, le système de blocage 138 est destiné à sélectivement prendre, en réponse à une commande, une position fermée et une position ouverte. Dans la position fermée, le système de blocage 138 est destiné à solidariser les bras oscillants droit et gauche 118D, 118G l'un à l'autre tout en laissant les bras oscillants droit et gauche 118D, 118G libres de pivoter ensemble par rapport au châssis 104 autour de l'axe pivot 122. Dans la position ouverte, le système de blocage 138 laisse les bras oscillants droit et gauche 118D, 118G libres de pivoter autour de l'axe pivot 122 de telle sorte que lorsqu'un des bras oscillants 118D, 118G pivote dans un sens, l'autre puisse pivoter dans l'autre sens, permettant ainsi l'inclinaison du véhicule 100.

Le système de blocage 138 comporte tout d'abord deux parties blocables 140D, 140G, montées sur le châssis 104 de manière pivotante autour d'un axe pivot transversal 142. Les parties blocables 140D, 140G sont par exemple des paliers en rotation sur un arbre du châssis s'étendant selon l'axe pivot 142. Il sera apprécié que l'axe pivot 142 est situé à distance de l'axe pivot 122, à l'arrière de ce dernier, sous le porte-bagage 108. Ainsi, cette partie du système de blocage 138 est déportée vers l'arrière, à un endroit où il y a suffisamment de place pour l'accueillir.

Les parties blocables 140D, 140G sont entraînées par respectivement les bras oscillants droit et gauche 118D, 118G. Plus précisément, pour réaliser cet entraînement, le système de blocage 138 comporte en outre deux mécanismes 144D, 144G de transmission de mouvement depuis respectivement les bras oscillants droit et gauche 118D, 118G jusque respectivement les deux parties blocables 140D, 140G. Chaque mécanisme de transmission 144D, 144G comporte un système à bielles pour transmettre la rotation du bras oscillant 118D, 118G en rotation de la partie blocable 140D, 140G autour de l'axe de pivot 142. Chaque système à bielles présente un rapport entre la rotation de la partie blocable 140D, 140G et la rotation du bras oscillant correspondant 118D, 118G strictement inférieur à 1.

Le système de blocage 138 comporte en outre un frein 148 destiné à bloquer par friction les parties blocables 140D, 140G l'une par rapport à l'autre de manière à solidariser les bras oscillants droit et gauche 118D, 118G. Plus précisément, le frein 148 comporte un secteur de disque 150 solidaire d'une des deux parties blocables 140D, 140G et un étrier 152 solidaire de l'autre des deux parties blocables 140D, 140G. L'étrier 152 reçoit le secteur de disque 150 et est destiné à enserrer le secteur de disque 150 lorsque le système de blocage 138 passe en position fermée, et pour le desserrer lorsque le système de blocage 138 passe en position ouverte. Il sera apprécié que le rapport de rotation inférieur à 1 permet de réduire la taille du secteur de disque 150, et donc l'encombrement général du système de blocage 138. Le frein 148 peut intégrer directement un actionneur électrique/hydraulique/pneumatique de type bistable ou monostable.

Ainsi, le système de blocage 138 est destiné à solidariser les bras oscillants droit et gauche 118D, 118G dans n'importe laquelle des positions relatives que les bras oscillants droit et gauche 118D, 118G occupent lorsque le système de blocage 138 passe en position fermée. Le blocage peut ainsi s'effectuer sur une plage continue des positions relatives des bras oscillants 118D, 118G. En variante, le frein 148 pourrait être remplacé par un système de solidarisation des deux parties blocables 140D, 140G apte uniquement à réaliser le blocage à des positions relatives discrètes des parties blocables 140D, 140G et donc également des bras oscillants 118D, 118G. Un tel système de solidarisation pourrait par exemple comporter une crémaillère ou un crabotage.

Le fonctionnement du véhicule inclinable 100 va à présent être décrit.

Lorsque le système de blocage 138 est en position ouverte, l'étrier 152 est desserré de sorte que les éléments blocables 140D, 140G sont libres de tourner l'un par rapport à l'autre autour de l'axe de pivot 142.

Ainsi, en utilisation normale, le véhicule inclinable s'utilise comme un véhicule à deux roues : le conducteur peut incliner le véhicule 100 dans les virages pour compenser la force centrifuge, en déplaçant son centre de gravité à l'intérieur du virage, et/ou en utilisant les effets gyroscopiques de la roue avant directrice (méthode appelée « contre-braquage » pour une moto). Plus précisément, ces opérations ont pour effet de faire pivoter un des bras oscillants 118D, 118G dans un sens et l'autre dans l'autre sens. Ainsi, l'une des roues arrière 102D, 102G va s'élever, tandis que l'autre va s'abaisser, entraînant l'inclinaison du véhicule 100 et en particulier du châssis 104.

Il sera apprécié que les roues arrière 102D, 102G restent parallèles l'une à l'autre et que la distance transversale entre les points d'appui des roues arrière 102D, 102G sur le sol augmente au fur et à mesure de l'inclinaison du véhicule 100. Cela se traduit par une poussée latérale des roues arrière 102D, 102G sur le sol qui augmente avec l'inclinaison, et qui stabilise le véhicule 100. Ainsi, la tenue de cap reste élevée en virage.

En outre, il sera apprécié que le système de suspension 116 permet d'incliner le véhicule sans empêcher le travail indépendant des suspensions droite et gauche 134D, 134G.

Par ailleurs, s'il se produisait une perte d'adhérence de l'une des roues arrière 102D, 102G avec le sol, la présence du balancier 126 reliant les deux montants 132D, 132G et des suspensions 134D, 134G permet à l'autre roue arrière de toujours adhérer au sol, de sorte que la stabilité du véhicule 100 est améliorée.

Lorsque le système de blocage 138 reçoit une commande de fermeture, l'étrier 152 se resserre sur le segment de disque 150 jusqu'à ce que les deux parties blocables 140D, 140G soient solidaires en rotation autour de l'axe de pivot 142, ce qui entraîne la solidarisation des bras oscillants 118D, 118G en rotation autour de l'axe pivot 122.

Il sera apprécié que le passage en position fermée peut être réalisé lorsque le véhicule avance ou bien est à l'arrêt.

Il sera en outre apprécié que les suspensions 134D, 134G sont toujours opérationnelles, même lorsque le système de blocage 138 est en position fermée. Cependant, dans ce cas les roues arrière 102D, 102G sont dans une configuration de type essieu rigide.

En outre, le système de suspension 116 est utilisable même en cas de forte inclinaison, permet d'assurer une tenue anti basculement très importante, est silencieux, nécessite peu d'entretien, permet de remplacer une béquille pour le soutient du véhicule à l'arrêt, permet de verrouiller le véhicule en position verticale même sur une forte pente en dévers.

Par ailleurs, il sera apprécié que le système de suspension 116 se situe sous le porte-bagage 108, mais que le véhicule est ouvert vers l'arrière permettant un accès aisé au système de suspension 116 sans nécessiter de soulever le véhicule.

En outre, il sera apprécié que la commande du système de blocage 138 peut aussi bien provenir d'un actionneur destiné à être activer manuellement par le conducteur du véhicule 100, que d'une unité de traitement établissant automatiquement la commande en fonction de différentes mesures de paramètres du véhicule.

L'invention n'est pas limitée à l'exemple de mise en oeuvre décrit précédemment, mais au contraire définie par les revendications qui suivent.

Il apparaîtra en effet à l'homme de l'art que diverses modifications peuvent être apportées à l'exemple de mise en oeuvre décrit ci-dessus, à la lumière de l'enseignement qui vient de lui être divulgué.

En particulier, les roues pourraient être remplacées par d'autres types de points d'appui au sol, tels que des chenilles ou bien des skis.

En outre, l'étrier 152 et le segment de disque 150 pourraient être remplacés par l'un des systèmes suivants (il sera noté qu'un embrayage est un type particulier de frein) :
- un frein à tambour (à câble ou hydraulique ou pneumatique) pouvant intégrer directement un actionneur électrique/hydraulique/pneumatique de type bistable ou monostable,
- un embrayage électromagnétique,
- un frein/embrayage à poudre magnétique,
- un embrayage multidisques (à câble ou hydraulique ou pneumatique) pouvant intégrer directement un actionneur électrique /hydraulique/pneumatique de type bistable ou monostable,
- un embrayage monodisque (à câble ou hydraulique ou pneumatique) pouvant intégrer directement un actionneur électrique /hydraulique/pneumatique de type bistable ou monostable,
- un frein à mâchoires (à câble ou hydraulique ou pneumatique) pouvant intégrer directement un actionneur électrique /hydraulique/pneumatique de type bistable ou monostable,
- un frein à sabot (à câble ou hydraulique ou pneumatique) pouvant intégrer directement un actionneur électrique /hydraulique/pneumatique de type bistable ou monostable,
- un frein à bande (à câble ou hydraulique ou pneumatique) pouvant intégrer directement un actionneur électrique /hydraulique/pneumatique de type bistable ou monostable,
- un embrayage/frein de type cône contre cône (à câble ou hydraulique ou pneumatique) pouvant intégrer directement un actionneur électrique /hydraulique/pneumatique de type bistable ou monostable.

Par ailleurs, dans les revendications qui suivent, les termes utilisés ne doivent pas être interprétés comme limitant les revendications aux éléments de l'exemple de mise en oeuvre décrit précédemment, mais doivent être interprétés pour y inclure tous les équivalents dont la prévision est à la portée de l'homme de l'art en appliquant ses connaissances générales.

## Revendications

1. Véhicule inclinable comportant :
- un châssis (104),
- un bras oscillant droit (118D) et un bras oscillant gauche (118G) montés sur le châssis (104) de manière pivotante autour d'un axe pivot transversal (122),
- un point d'appui au sol droit (102D) et un point d'appui au sol gauche (102G) montés sur respectivement les bras oscillants droit et gauche (118D, 118G), et
- un système de blocage (138) destiné à sélectivement solidariser et désolidariser les bras oscillants droit et gauche (118D, 118G) l'un de l'autre,
le système de blocage (138) comportant :
- deux parties blocables (140D, 140G), montées sur le châssis (104) de manière pivotante autour d'un axe pivot (142) et entraînées par respectivement les bras oscillants droit et gauche (118D, 118G), et
- un système de solidarisation des parties blocables (140D, 140G) l'une par rapport à l'autre de manière à solidariser les bras oscillants droit et gauche l'un à l'autre,
**caractérisé en ce que** l'axe pivot (142) des parties blocables est transversal et distant de l'axe pivot (122) des bras oscillants (118D, 118G), et **en ce que** le système de blocage (138) comporte en outre deux mécanismes (144D, 144G) de transmission de mouvement depuis respectivement les bras oscillants droit et gauche (118D, 118G) jusque respectivement les deux parties blocables (140D, 140G).

2. Véhicule inclinable selon la revendication 1, dans lequel chaque mécanisme de transmission (144D, 144G) présente un rapport entre la rotation de la partie blocable correspondante et la rotation du bras oscillant correspondant strictement inférieur à 1.

3. Véhicule inclinable selon la revendication 1 ou 2, dans lequel le système de solidarisation est un frein (148) destiné à bloquer les parties blocables (140D, 140G) par friction.

4. Véhicule inclinable selon la revendication 3, dans lequel le frein (148) comporte un secteur de disque (150) solidaire d'une des deux parties blocables et un étrier (152) solidaire de l'autre des deux parties blocables, l'étrier (152) recevant le secteur de disque (150).

5. Véhicule inclinable selon l'une quelconque des revendications 1 à 4, dans lequel les points d'appui droit et gauche (102D, 102G) sont des points d'appui arrière.

6. Véhicule inclinable selon la revendication 5, comportant en outre au moins un point d'appui avant directeur et une direction destinée à orienter le ou les points d'appui avant.

7. Véhicule inclinable selon la revendication 5 ou 6, dans lequel les points d'appui arrière (102D, 102G) sont moteurs.

## Patentansprüche

1. Neigbares Fahrzeug, umfassend:
- ein Fahrgestell (104),
- einen rechten Schwingarm (118D) und einen linken Schwingarm (118G), die um eine querlaufende Schwenkachse (122) schwenkbar auf dem Fahrgestell (104) montiert sind,
- einen rechten Bodenhaftungspunkt (102D) und einen linken Bodenhaftungspunkt (102G), die jeweils auf dem rechten und linken Schwingarm (118D, 118G) montiert sind, und
- ein Feststellsystem (138), das dazu bestimmt ist, den rechten und linken Schwingarm (118D, 118G) fest miteinander zu verbinden und voneinander zu lösen,
wobei das Feststellsystem (138) umfasst:
- zwei feststellbare Abschnitte (140D, 140G), die um eine Schwenkachse (142) schwenkbar auf dem Fahrgestell (104) montiert sind, und durch jeweils den rechten und linken Schwingarm (118D, 118G) angetrieben werden, und
- ein System zur festen Verbindung der feststellbaren Abschnitte (140D, 140G) miteinander, um den rechten und linken Schwingarm fest miteinander zu verbinden,
**dadurch gekennzeichnet, dass** die Schwenkachse (142) der feststellbaren Abschnitte querlaufend und im Abstand von der Schwenkachse (122) der Schwingarme (118D, 118G) angeordnet ist, und dadurch, dass das Feststellsystem (138) darüber hinaus zwei Mechanismen (144D, 144G) zur Übertragung einer Bewegung jeweils von dem rechten und linken Schwingarm (118D, 118G) bis zu jeweils den beiden feststellbaren Abschnitten (140D, 140G) umfasst.

2. Neigbares Fahrzeug nach Anspruch 1, wobei jeder Mechanismus (144D, 144G) zur Übertragung ein Verhältnis zwischen der Rotation des entsprechenden feststellbaren Abschnitts und der Rotation des entsprechenden Schwingarmes von grundsätzlich kleiner als 1 aufweist.

3. Neigbares Fahrzeug nach Anspruch 1 oder 2, wobei das System zur festen Verbindung eine Bremse (148) ist, die dazu bestimmt ist, die feststellbaren Abschnitte (140D, 140G) durch Reibung festzustellen.

4. Neigbares Fahrzeug nach Anspruch 3, wobei die Bremse (148) einen Scheibensektor (150) umfasst, der fest mit einem der beiden feststellbaren Abschnitte verbunden ist, und einen Sattel (152), der fest mit dem anderen der beiden feststellbaren Abschnitte verbunden ist, wobei der Sattel (152) den Scheibensektor (150) aufnimmt.

5. Neigbares Fahrzeug nach einem der Ansprüche 1 bis 4, wobei der rechte und linke Haftungspunkt (102D, 102G) hintere Haftungspunkte sind.

6. Neigbares Fahrzeug nach Anspruch 5, darüber hinaus zumindest einen vorderen Lenkungshaftungspunkt und eine Lenkung umfassend, die dazu bestimmt ist, den oder die vorderen Haftungspunkte zu orientieren.

7. Neigbares Fahrzeug nach Anspruch 5 oder 6, wobei die hinteren Haftungspunkte (102D, 102G) angetrieben sind.

## Claims

1. Tiltable vehicle including:
- a chassis (104),
- a right oscillating arm (118D) and a left oscillating arm (118G) pivotally mounted on the chassis (104) about a transversal swivel axle (122),
- a right ground-supporting point (102D) and a left ground-supporting point (102G) mounted on the right and left oscillating arms (118D, 118G), respectively, and
- a locking system (138) intended to selectively rigidly connect and disconnect the right and left oscillating arms (118D, 118G) relative to one another,
the locking system (138) including:
- two lockable parts (140D, 140G), pivotally mounted on the chassis (104) about a swivel axle (142) and actuated by the right and left oscillating arms (118D, 118G), respectively, and
- a system for rigidly connecting the lockable parts (140D, 140G) relative to one another so as to rigidly connect the right and left oscillating arms to one another,
**characterised in that** the swivel axle (142) of the lockable parts is transversal and distant from the swivel axle (122) of the oscillating arms (118D, 118G), and **in that** the locking system (138) further includes two motion transmission mechanisms (144D, 144G) from the right and left oscillating arms (118D, 118G), respectively, to the two lockable parts (140D, 140G), respectively.

2. Tiltable vehicle according to claim 1, wherein each transmission mechanism (144D, 144G) exhibits a ratio between the rotation of the corresponding lockable part and the rotation of the corresponding oscillating arm strictly less than 1.

3. Tiltable vehicle according to claim 1 or 2, wherein the connection system is a brake (148) intended to lock the lockable parts (140D, 140G) by friction.

4. Tiltable vehicle according to claim 3, wherein the brake (148) includes a disk sector (150) rigidly connected to one of the two lockable parts and a caliper (152) rigidly connected to the other of the two lockable parts, the caliper (152) receiving the disk sector (150).

5. Tiltable vehicle according to any one of claims 1 to 4, wherein the right and left supporting points (102D, 102G) are rear supporting points.

6. Tiltable vehicle according to claim 5, further including at least one steering front supporting point and steering intended to position the front supporting point (s) .

7. Tiltable vehicle according to claim 5 or 6, wherein the rear supporting points (102D, 102G) are propulsive.
